# EUROPEAN PATENT SPECIFICATION

(11) **EP 3 732 890 B1**
(45) Date of publication and mention of the grant of the patent: **06.10.2021**
(21) Application number: 18807923.0
(22) Date of filing: 20.11.2018
(51) Int. Cl.: H04N 21/25, H04N 21/442

(54) **A FAVORITE CHANNELS LIST CREATION METHOD**
VERFAHREN ZUR ERSTELLUNG EINER FAVORITEN-KANALLISTE
PROCÉDÉ DE CRÉATION DE LISTE DE CHAÎNES PRÉFÉRÉES

(30) Priority: 25.12.2017 TR 201721667
(43) Date of publication of application: 04.11.2020
(73) Proprietor: Arçelik Anonim Sirketi, 34445 Istanbul (TR)
(72) Inventor: SONMEZ, Cagatay, 34950 Istanbul (TR); SUMENGEN, Cem, 34950 Istanbul (TR); UZUMCUOGLU, Anil, 34950 Istanbul (TR); KAYAHAN, Dilek, 34950 Istanbul (TR); OZYALCIN, Selim, 34950 Istanbul (TR)
(86) International application number: PCT/EP2018/081828
(87) International publication number: WO 2019/129426

(56) References cited:
- EP-A1- 2 357 804
- US-A1- 2014 280 116
- US-A1- 2015 256 892

## Description

### TECHNICAL FIELD

The present invention relates to a method for dynamically creating a favorite channels list by using a PVR (Personal Video Recorder) data collected from the users.

### PRIOR ART

Nowadays, the number of channels being broadcast may be significantly high. It is a known method for the television users to watch the channels they prefer watching the most among this many channels by means of a discrete list, i.e. their favorites list. However, the users usually create said favorites list by themselves, by adding the channels they desire to said favorites list.

Apart from this, there are also applications in which favorites lists are automatically created by various methods and presented to the users. In these applications, in dynamically created favorites lists, it is essential to include the channels that may be of interest to the viewers.

Patent document no. US8631437 mentions monitoring the channels stored by a single user and automatically creating a favorites list according to this information.

Patent document no. US7434246 mentions automatically creating a favorites list by monitoring the channel watching habits of a single user.

In state of the art applications, generally, TV watching habits of only a related user is monitored and the favorite channels list is created for the interest of this single user. However, in the present world, people desire shaping their personal preferences not only according to their own habits but also by monitoring and evaluating the contents preferred by other people. This desire and need is also existing by TV channel preferences.

### PROBLEMS SOLVED BY THE INVENTION

The aim of the present invention is to realize a method for automatically creating a favorite channels list customized for the users of a television by collecting channel information of the programs recorded on the television by a plurality of television users and creating said favorite channels list according to this information.

The system used to achieve the aim of the invention, comprises a plurality of televisions, at least one server connected to said televisions via a cable or wireless communication network, and at least one database connected to said at least one server.

The invention is a method according to claim 1.

In the invention, history based program recording data collected from other users may be used, as well as the PVR data for which the user have set a timer for a future date (scheduled recording). The advantage of using PVR data is that for creating a favorite channels list it allows using not only history based or momentary information, but also future related information. Thus, popular programs may shape the favorites list of the users even before they begin.

By means of the invention, users will have the opportunity of benefiting from the watching habits of other TV users, which is a useful feature provided to a TV user considering the fact that people follow the content liked by other people in social sharing applications. In addition, in recent recommendation systems, the most popular contents are created by the information collected from all users. The recording information collected from all users will constitute a significant information in recommending a favorites list.

### DETAILED DESCRIPTION OF THE INVENTION

A system and a method realized to achieve the aims of the present invention are illustrated in the accompanying drawings, wherein:

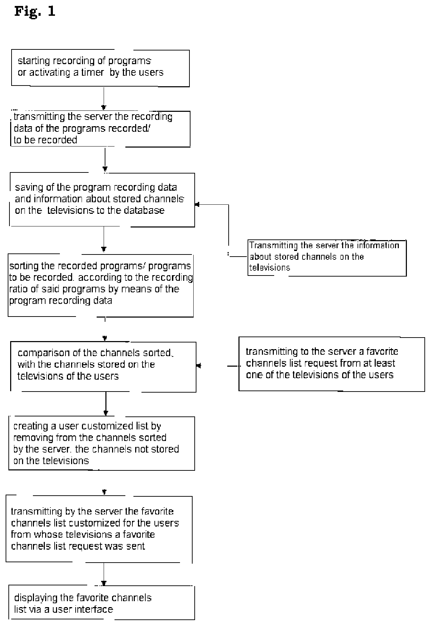

Figure 1: is a flow diagram of the method of the invention.

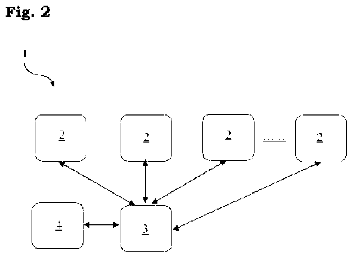

Figure 2: is a schematic view of the system of the invention.

The elements in the figures are numbered individually and the correspondence of these numbers are given hereinafter.
1. System
2. Television
3. Server
4. Database

In a preferred embodiment of the invention, the system (1) enabling creating a favorite channels list for the users, comprises a plurality of televisions (2), at least one server (3) connected to said televisions (2) via a cable or wireless communication network, and at least one database (4) connected to said at least one server (3).

Said televisions (2) comprise an internal or external memory unit to record programs, a screen to display TV programs and the favorite channels list, and a control unit adapted to record said programs and/or to activate a timer for scheduled recording of said programs according to commands from a user, and to send data to and receive data from the server (3) by bidirectionally data communicating with the server (3).

In an embodiment of the invention, said televisions (2) and server (3) each comprise a data communication unit, and the televisions (2) are able to perform bidirectionally data communication with the server (3) via a cable and/or wirelessly.

In another embodiment of the invention, said televisions (2) perform bidirectionally data communication with the server (3) via a cable and/or wirelessly through a data communication unit provided in each of the server (3) and the set-top boxes connected to said televisions (2).

A method used in a preferred embodiment of the invention, to create a user customized favorite channels lists by using a system (1) according to any of the above-disclosed embodiments, comprises the steps of:
- starting recording of TV programs by the televisions (2) and/or activating a timer for a future recording according to the commands from the users,
- transmitting the server (3) the recording data of the programs whose recording is started in the televisions (2) or of those scheduled to be recorded by means of the timer,
- transmitting the server (3) the list of stored channels on the users' televisions (2),
- saving of the program recording data to the database (4) by the server (3),
- sorting the channels on which the recorded programs/ programs to be recorded are displayed, according to the recording number of said programs, by the server (3) analyzing the program recording data saved on the database (4),
- transmitting to the server (3) a favorite channels list request from at least one of the televisions (2) of the users,
- comparison of the channels sorted by the server (3), with the channels stored on the televisions (2) which have sent a favorite channels list request,
- creating a target user customized favorite channels list by removing from the channels sorted by the server (3), the channels not stored on the televisions (2) sending a favorite channels list request,
- transmitting by the server (3) the favorite channels list customized for the users from whose televisions (2) a favorite channels list request was sent, and
- displaying the users the favorite channels lists on the televisions (2) via a user interface.

In this embodiment of the invention, the users send a command to the televisions (2) preferably via a remote controller, to record a TV program being broadcast on their televisions (2) and/or to record a program which will be broadcast later. According to the received command, said televisions (2) start recording a program being broadcast, or activate a timer for scheduled recording of a program which will be broadcast later. Then, the information about the recorded programs/ programs to be recorded by the users is sent by the televisions (2) to the server (3) to be collected there. To that end, the televisions (2) connect with the server (3) via the data communication network, and upon establishing said connection, the information about the programs recorded or scheduled to be recorded by the users, is sent to the server (3), and this information is saved in a database (4).

Further in this embodiment, the lists of channels stored on the televisions (2) of the users are sent to the server (3) and saved in the database (4), before the step of "comparison of the channels sorted by the server (3), with the channels stored on the televisions (2)".

In an embodiment of the invention, in the step of "transmitting the server (3) the recording data of the programs whose recording is started in the televisions (2) or of those to be recorded by means of the timer," the lists of channels stored on the televisions (2) are sent to the server (3) together with the information of the programs which the user began or scheduled the recording of, and is saved in the database (4).

In another embodiment of the invention, the lists of channels stored on the televisions (2) are sent to the server (3) and are saved in the database (4) upon the users turning their televisions (2) on and a connection being established between the server (3) and the televisions (2).

In another embodiment of the invention, the lists of channels stored on the televisions (2) are periodically sent to the server (3), saved to the database (4), and are continuously updated.

In the next step, the channels on which are shown/will be shown the most recorded programs or those which will be recorded the most, are listed as the favorite channels list for the users. For this, the information of the recorded programs and those which will be recorded, collected in the database (4) is continuously analyzed by the server (3), determining the most recorded programs or those which will be recorded the most. During this analysis, the server (3) executes a sorting algorithm and sorts the most recorded programs according to their recording ratio from the highest through the lowest, creating a list.

In the next step, the channels of the listed programs are compared with the stored channels on the televisions (2) of the users. The channels which are on the favorite channels list prepared by the server (3) but were not added to the channel list of a user or were removed later by the user, are identified. The programs on the channels which the user cannot access with his/her already available television sources are removed from the favorite channels list to be suggested by the server (3). Thus, a user is not suggested the channels which he/she cannot access from his/her television, such as satellite channels for a television (2) without a satellite connection. The server (3) prepares a favorite channels list for each user using the steps of said method.

In the next step, the server (3) sends each user a custom prepared favorite channels list. For this, the server (3) sends the target user a favorite channels list prepared with the most up to date data, and displays this on it television (2) via a user interface. This favorite channels list may be displayed automatically to the user, as well as displaying it upon the user pressing a button on a controller.

In an embodiment of the invention, a favorite channels list for a user custom prepared by the server (3), is displayed via a user interface each time the user turns the television (2) on. In this embodiment, when the user turns the television (2) on, said television (2) connects the server (3) via a communication network, and requests the server (3) to send a favorite channels list. The server (3) automatically transmits the related favorite channels list to the television (2) which sent the request, and this favorite channels list is displayed to the target user via a user interface.

In another embodiment of the invention, a favorite channels list prepared by the server (3), is displayed to the user via a user interface upon the user performing an activation activity selected from the menu of the television (2). In this embodiment, when a user performs the activation activity, a favorite channels list request is transmitted by the television (2) to the server (3) via a communication network in accordance with said activation activity. The server (3) automatically transmits the related favorite channels list to the television (2) which sent the request, and this is displayed to the target user via a user interface.

In another embodiment of the invention, said user interface suggests the favorite channels list to the user each time a list is periodically requested from the server (3) in the background. In this embodiment, the television (2) periodically transmits a favorite channels list request to the server (3) via a communication network. The server (3) automatically transmits the related favorite channels list to the television (2) which sent the request, and the favorite channels list is displayed to the target user via a user interface.

If desired, the user may accept receiving said favorite channels list sent by the server (3) and suggested via a user interface, and add this as a new list to the available favorite channels lists.

If the user does not wish suggestion of favorite channels lists via said user interface, he/she is able to turn this feature off from settings of the television (2). Thus, the television (2) is prevented from sending a favorite channels list request to the server (3).

## Claims

1. A method for creating a user customized favorite channels list, by using a system (1) comprising a plurality of televisions (2), at least one server (3) connected to said televisions (2) via a cable or wireless communication network, and at least one database (4) connected to said at least one server (3), **comprising the step of**
- starting recording of TV programs by the televisions (2) and/or activating a timer for a future recording according to the commands from the users, **characterized by the steps of**
- transmitting to the server (3) the recording data of the programs whose recording is started in the televisions (2) or of those scheduled to be recorded by means of the timer,
- transmitting to the server (3) the list of stored channels on the users' televisions (2),
- saving of the program recording data to the database (4) by the server (3),
- sorting the channels on which are shown/will be shown the most recorded programs or those which will be recorded the most, according to the recording number of said programs, by the server (3) analyzing the program recording data saved on the database (4),
- transmitting to the server (3) a favorite channels list request from at least one of the televisions (2) of the users,
- comparison of the channels sorted by the server (3), with the channels stored on the television (2) which has sent a favorite channels list request,
- creating a target user customized favorite channels list by removing the channels not stored on the television (2) sending a favorite channels list request, from the channels sorted by the server (3), and
- transmitting by the server (3) the favorite channels list customized for the user from whose television (2) a favorite channels list request was sent.

2. A method according to claim 1, **characterized in that,** the lists of channels stored on the televisions (2) are sent to the server (3) and are saved in the database (4) in the step of "transmitting the server (3) the recording data of the programs whose recording is started in the televisions (2) or of those scheduled to be recorded by means of the timer,".

3. A method according to claim 1, **characterized in that** the lists of channels stored on the televisions (2) are sent to the server (3) and are saved in the database (4) upon the users turning their television (2) on and a connection being established between the server (3) and the televisions (2).

4. A method according to claim 1, **characterized in that** the list of channels stored on the televisions (2) are periodically sent to the server (3) and saved in the database (4).

5. A method according to claim 1, **characterized in that,** in the step of "transmitting to the server (3) a favorite channels list request from at least one of the televisions (2) of the users," automatically sending by the televisions (2) to the server (3) a favorite channels list request, takes place each time the users turn their television (2) on.

6. A method according to claim 1, **characterized in that,** in the step of "transmitting to the server (3) a favorite channels list request from at least one of the televisions (2) of the users," sending by the televisions (2) to the server (3) a favorite channels list request, takes place upon the users performing an activation process in the menu of their televisions (2).

7. A method according to claim 1, **characterized in that,** in the step of "transmitting to the server (3) a favorite channels list request from at least one of the televisions (2) of the users," sending by the televisions (2) to the server (3) a favorite channels list request, takes place periodically.

8. A method according to claim 1, **characterized by** the step of displaying the target users via a user interface the favorite channels list sent by the server (3) after the step of "transmitting the favorite channels list prepared by the server (3) to the televisions (2) from which a favorite channels list request was sent."

## Patentansprüche

1. Ein Verfahren zum Erstellen von einer benutzerspezifischen Favoritenkanalliste, unter der Verwendung eines Systems (1) mit mehreren Fernsehgeräten (2), mindestens einem Server (3), welches über ein Kabel- oder drahtloses Kommunikationsnetz mit den Fernsehgeräten (2) verbunden ist und mindestens eine Datenbank (4), die mit mindestens einem Server (3) verbunden ist, **umfasst folgende Schritte:**
- Starten der Aufzeichnung von Fernsehprogrammen durch die Fernsehgeräte (2) und/oder Aktivieren eines Timers für eine zukünftige Aufzeichnung anhand der Befehle der Benutzer, **gekennzeichnet durch die Schritte:**
- Übertragen der Aufnahmedaten der Sendungen, deren Aufnahme in den Fernsehgeräten (2) gestartet wird oder deren Aufnahme mit Hilfe des Timers geplant ist, auf den Server (3),
- Übertragen der Liste der gespeicherten Kanäle auf den Fernsehgeräten der Benutzer (2) an den Server (3),
- Speichern der Programmaufzeichnungsdaten auf der Datenbank (4) durch den Server (3),
- Sortieren der Kanäle, auf denen die am häufigsten aufgezeichneten Programme oder die am häufigsten aufgezeichneten Programme gezeigt werden oder gezeigt werden sollen, gemäß der Aufzeichnungsnummer der Programme durch den Server (3) Analysieren der in der Datenbank (4) gespeicherten Programmaufzeichnungsdaten,
- Übertragen einer Favoritenkanallistenanforderung von mindestens einem der Fernsehgeräte (2) der Benutzer an den Server (3),
- Vergleich der vom Server (3) sortierten Kanäle mit den auf dem Fernseher (2) gespeicherten Kanälen, der eine Favoritenlistenanforderung ausgestellt hat,
- Erstellen einer an den Zielbenutzer angepassten Favoritenkanalliste durch Entfernen der Kanäle, die nicht auf dem Fernseher gespeichert sind (2), Senden einer Favoritenkanallistenanforderung von den Kanälen, die vom Server (3) sortiert wurden, und
- Übertragen der Favoritenkanalliste durch den Server (3), die auf den Benutzer zugeschnitten ist und von dessen Fernseher (2) eine Favoritenkanallistenanforderung gesendet wurde.

2. Das Verfahren, wie in Anspruch 1 aufgeführt, **ist dadurch gekennzeichnet, dass** die auf den Fernsehgeräten (2) gespeicherten Senderlisten an den Server (3) gesendet und in der Datenbank (4) unter dem Schritt,, "Übertragen der Aufzeichnungsdaten der Programme, deren Aufzeichnung in den Fernsehgeräten (2) gestartet wird, oder derjenigen, die mit Hilfe des Timers aufgezeichnet werden sollen, an den Server (3)" gespeichert werden.

3. Das Verfahren, wie in Anspruch 1 aufgeführt, **ist dadurch gekennzeichnet, dass** die auf den Fernsehgeräten (2) gespeicherten Senderlisten an den Server (3) gesendet und in der Datenbank (4) gespeichert werden, wenn der Benutzer sein Fernsehgerät (2) einschaltet und eine Verbindung zwischen dem Server (3) und den Fernsehgeräten (2) hergestellt wird.

4. Das Verfahren, wie in Anspruch 1 aufgeführt, **ist dadurch gekennzeichnet, dass** die Liste der auf den Fernsehgeräten (2) gespeicherten Kanäle periodisch an den Server (3) gesendet und in der Datenbank (4) gespeichert wird.

5. Das Verfahren, wie in Anspruch 1 aufgeführt, **ist dadurch gekennzeichnet, dass** im Schritt "Übertragen einer Favoritenkanallistenanforderung von mindestens einem der Fernsehgeräte (2) der Benutzer an den Server (3)" jedes Mal automatisch eine Anfrage einer Favoritenkanalliste durch das Fernsehgerät (2) an den Server gesendet wird, wenn der Benutzer seinen Fernseher (2) einschaltet.

6. Das Verfahren, wie in Anspruch 1 aufgeführt, **ist dadurch gekennzeichnet, dass** im Schritt "Übertragen einer Favoritenkanallistenanforderung von mindestens einem der Fernsehgeräte (2) der Benutzer an den Server (3)" das Senden einer Favoritenkanallistenanforderung durch die Fernsehgeräte (2) an den Server (3) erfolgt, wenn der Benutzer einen Aktivierungsvorgang im Menü seiner Fernsehgeräte (2) durchführt.

7. Das Verfahren, wie in Anspruch 1 aufgeführt, **ist dadurch gekennzeichnet, dass** im Schritt "Übertragen einer Favoritenkanallistenanforderung von mindestens einem der Fernsehgeräte (2) der Benutzer an den Server (3)" das Senden einer Favoritenkanallistenanforderung durch die Fernsehgeräte (2) an den Server (3) periodisch stattfindet.

8. Das Verfahren, wie in Anspruch 1 aufgeführt, **ist gekennzeichnet durch den** Schritt der Anzeige der vom Server (3) gesendeten Favoritenkanalliste über eine Benutzerschnittstelle den Zielbenutzern nach dem Schritt "Übertragen der vom Server (3) erstellten Favoritenkanalliste an die Fernsehgeräte (2), von denen eine Favoritenkanallistenanforderung gesendet wurde."

## Revendications

1. Un procédé pour créer une liste de canaux favoris personnalisée par l'utilisateur, en utilisant un système (1) comprenant une pluralité de téléviseurs (2), au moins un serveur (3) connecté auxdits téléviseurs (2) via un réseau de communication par câble ou sans fil, et au moins une base de données (4) connectée audit au moins un serveur (3), **comprenant les étapes suivantes**
- démarrer l'enregistrement de programmes de télévision par les téléviseurs (2) et/ou activer une minuterie pour un enregistrement futur selon les commandes des utilisateurs, **caractérisé par les étapes suivantes**
- transmettre au serveur (3) les données d'enregistrement des programmes dont l'enregistrement est lancé sur les téléviseurs (2) ou de ceux dont l'enregistrement est programmé au moyen de la minuterie,
- transmettre au serveur (3) la liste des chaînes mémorisées sur les téléviseurs (2) des utilisateurs,
- sauvegarder les données d'enregistrement du programme dans la base de données (4) par le serveur (3),
- trier les chaînes sur lesquelles sont ou seront diffusés les programmes les plus enregistrés ou ceux qui seront les plus enregistrés, en fonction du nombre d'enregistrements desdits programmes, par le serveur (3) analysant les données d'enregistrement des programmes sauvegardées dans la base de données (4),
- transmettre au serveur (3) une demande de liste de canaux favoris d'au moins un des téléviseurs (2) des utilisateurs,
- comparer les chaînes triées par le serveur (3), avec les chaînes stockées sur le téléviseur (2) qui a envoyé une demande de liste de chaînes favorites,
- créer une liste de canaux favoris personnalisée par l'utilisateur cible en retirant les canaux non stockés sur le téléviseur (2) en envoyant une demande de liste de canaux favoris, à partir des canaux triés par le serveur (3), et
- transmettre par le serveur (3) la liste de canaux favoris personnalisée pour l'utilisateur à partir duquel la télévision (2) a envoyé une demande de liste de canaux favoris.

2. Un procédé selon la déclaration 1, **est caractérisé en ce que**, les listes de chaînes stockées sur les téléviseurs (2) sont envoyées au serveur (3) et sont sauvegardées dans la base de données (4) lors de l'étape de "transmission au serveur (3) des données d'enregistrement des programmes dont l'enregistrement est lancé sur les téléviseurs (2) ou de ceux dont l'enregistrement est programmé au moyen de la minuterie".

3. Un procédé selon la déclaration 1, **est caractérisé en ce que** les listes de canaux stockées sur les téléviseurs (2) sont envoyées au serveur (3) et sont sauvegardées dans la base de données (4) lorsque les utilisateurs allument leur téléviseur (2) et qu'une connexion est établie entre le serveur (3) et les téléviseurs (2).

4. Un procédé selon la déclaration 1, **est caractérisé en ce que** la liste des canaux stockés sur les téléviseurs (2) est envoyée périodiquement au serveur (3) et sauvegardée dans la base de données (4).

5. Un procédé selon la déclaration 1, **est caractérisé en ce que**, lors de l'étape de "transmission au serveur (3) d'une demande de liste de canaux favoris provenant d'au moins un des téléviseurs (2) des utilisateurs", l'envoi automatique par les téléviseurs (2) au serveur (3) d'une demande de liste de canaux favoris, a lieu chaque fois que les utilisateurs allument leur téléviseur (2).

6. Un procédé selon la déclaration 1, **est caractérisé en ce que**, dans l'étape de "transmission au serveur (3) d'une demande de liste de canaux favoris provenant d'au moins un des téléviseurs (2) des utilisateurs", l'envoi par les téléviseurs (2) au serveur (3) d'une demande de liste de canaux favoris, a lieu lorsque les utilisateurs effectuent un processus d'activation dans le menu de leurs téléviseurs (2).

7. Un procédé selon la déclaration 1, **est caractérisé en ce que**, lors de l'étape de "transmission au serveur (3) d'une demande de liste de canaux favoris provenant d'au moins un des téléviseurs (2) des utilisateurs", l'envoi par les téléviseurs (2) au serveur (3) d'une demande de liste de canaux favoris, a lieu périodiquement.

8. Un procédé selon la déclaration 1, **est caractérisé en ce que** l'étape consistant à afficher aux utilisateurs cibles, via une interface utilisateur, la liste de canaux favoris envoyée par le serveur (3) après l'étape consistant à "transmettre la liste de canaux favoris préparée par le serveur (3) aux téléviseurs (2) à partir desquels une demande de liste de canaux favoris a été envoyée".
